# EUROPEAN PATENT SPECIFICATION

(11) **EP 0 727 164 B1**
(45) Date of publication and mention of the grant of the patent: **29.07.1998**
(21) Application number: 96102218.3
(22) Date of filing: 15.02.1996
(51) Int. Cl.: A47J 31/06

(54) **Filter carrier unit for an espresso making machine**
Filterträger-Einheit für eine Espresso Kaffeemaschine
Porte-filtre pour une machine à café espresso

(30) Priority: 17.02.1995 DE 29502595 U
(43) Date of publication of application: 21.08.1996
(73) Proprietor: Eugster/Frismag AG, CH-8590 Romanshorn (CH)
(72) Inventor: Fischer, Daniel, 8590 Romanshorn (CH)
(74) Representative: Schubert, Siegmar, Dipl.-Ing.

(56) References cited:
- EP-A- 0 515 245
- DE-A- 4 129 814
- US-A- 3 878 772

## Description

This invention relates to a filter carrier unit for an espresso making machine and is of the type that has an upwardly open, pot-shaped filter carrier vessel, from the upper circular edge of which a filter basket is suspended and extends into the inner vessel space. Underneath the bottom of the filter basket the vessel receives the brewed espresso coffee flowing out of the filter basket. The vessel has a bottom provided with at least one outlet aperture (usually formed as an outlet nipple), under which, on an emplacement of the coffee making machine, a receptacle, such as a coffee pot or coffee cup is positioned to receive the coffee discharged through the outlet aperture. The use of two outlet nipples makes possible a simultaneous filling of two cups positioned under a respective outlet nipple.

During the making of espresso coffee, a characteristic, fine-pore foam is formed that floats on the coffee surface. In addition to the taste proper, the fineness of the foam determines the quality of the espresso coffee. A filter carrier unit according to the preamble of claim 1 is known from DE-A-4129814.

As known, the foam formation on the surface of espresso coffee is often irregular; such irregularities are caused by several factors: the quality of the coffee, the degree of grind, the water temperature, the pressure buildup in the filter, etc. Any of these factors may contribute to conditions resulting in the generation of undesirably large bubbles which are included in the fine-pore foam and which may even temporarily block an outlet nipple. In a filter carrier vessel having a single outlet nipple, such a temporary blockage leads to an intermittent outflow and in filter carrier vessels having two outlet nipples the cups are not filled uniformly.

US-A-3878772 is directed to a special reusable container for receiving instant coffee granules to be usable in lieu of a conventional coffee container for receiving coffee grounds. The basic idea of this reference is to prepare cheap coffee from instant powder and to design an apparatus making it possible to continue the use of canned coffee until present stocks are depleted and then to phase in the use of instant coffee. In this apparatus there is provided a reusable container composed of a strainer and an undercup for receiving instant coffee. This container can be placed in the base part of a conventional coffee maker, which cylindrical base part comprises a central outlet in its bottom to discharge brewed coffee in a catching container. The lower edge of the undercup has formed therein an internal enlarged recess which forms a hood like structure above the discharge outlet. Located within the undercup and about the wall of the recess and between the outer side wall of the undercup is an annular chamber to receive instant coffee granules. The extracted instant coffee is discharged from the annular chamber towards the central discharge outlet in the base part through a plurality of discharge holes provided in the lower edge of of the annular chamber within the undercup. Thus it is possible to use the conventional already existing base part and to use instant coffee granules instead of coffee ground.

It is an object of the present invention to provide an improved filter carrier unit of the above-outlined type for an espresso making machine with a filter basket as defined in the precharacterizing part of claim 1 which ensures that the foam discharged by an outlet nipple is not interrupted by larger bubbles and that the outlet nipple is not blocked which would result in the known disadvantages.

This object is solved by the characterizing features of claim 1. Advantageous further developments are defined in the subclaims.

This object and others to become apparent as the specification progresses, are accomplished by the invention, according to which, briefly stated, the filter carrier unit for an espresso making machine includes a filter carrier vessel having a bottom and being adapted to support a filter basket therein; an outlet aperture provided in the vessel bottom; a collective space for the creamy espresso coffee discharged from the filter basket, said space being defined between the filter basket and the bottom of the carrier vessel; a hood disposed in said colective space and covering the outlet aperture; and a plurality of throughgoing passages provided in the edge region of the hood for allowing espresso coffee to flow through the hood to the outlet aperture.

The hood placed over the outlet nipple or nipples forms a quieting (flow-calming) path thereover in the filter carrier vessel. The passages are, for example, at least three in number, but preferably five to eight passages are provided.

The size of the passages in the hood is so designed that they sufficiently delay the outflow of the foamy espresso so that the larger, less resistant bubbles burst, while the creamy espresso coffee flows through unaffected. By using such a quieting path, a surprisingly uniform, fine-pore foam is obtained with simple means.

Particularly good results are achieved with a hood that is provided with five to eight circumferentially uniformly distributed passages wherein the individual passages have a semicircular cross-sectional outline having a diameter of 1.5 mm.

Figure 1 is a sectional side elevational view of a preferred embodiment of a filter carrier unit according to the invention.

Figure 1a is a fragmentary sectional side elevational view of another preferred embodiment.

Figure 2 is a sectional view taken along line II-II of Figure 1.

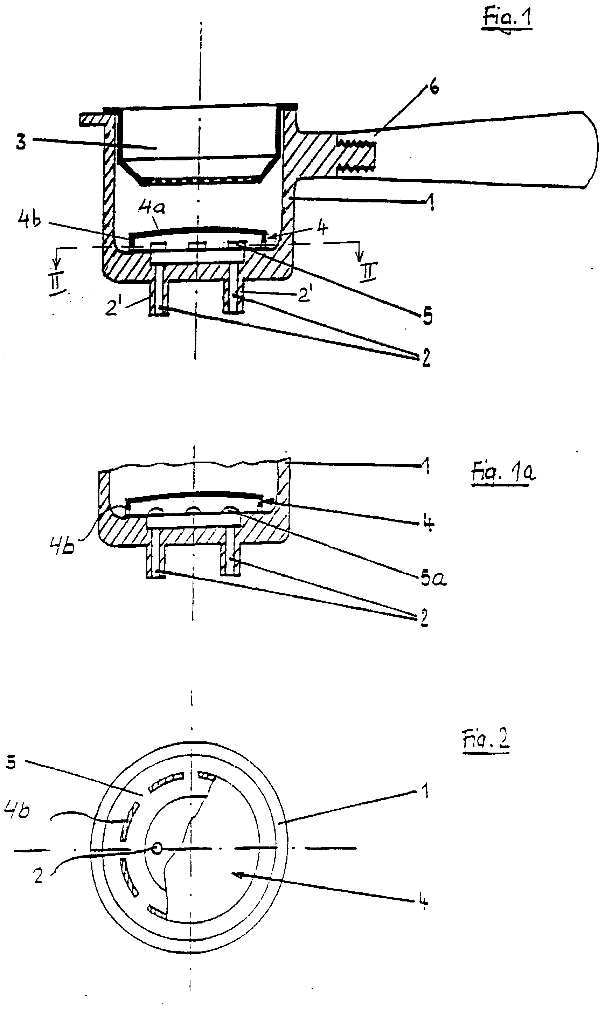

Turning to Figure 1, there is shown a filter carrier 1 formed as an upwardly open vessel of generally cylindrical shape which, in its bottom, is provided with two outlet apertures 2 formed as respective, outwardly and downwardly projecting outlet nipples 2'. The upper edge of the carrier vessel 1 serves as a support for a circular, radially outwardly projecting shoulder of a filter basket 3 which thus may be suspended to project into the inner space of the carrier vessel 1. Between the filter basket 3 and the bottom of the carrier vessel 1, a collecting space for the creamy espresso coffee is defined which is discharged from the filter basket 3. A manually engageable handle 6 is attached to the filter carrier vessel 1.

The bottom of the filter carrier vessel 1 is covered by a hood generally designated at 4 which extends over the outlet apertures 2 and which essentially has the shape of a flat hollow cylinder having an upright cylinder wall 4b and a closed, outwardly convex top 4a.

In the cylinder wall 4b rectangular outlet passages 5 are provided in uniform distribution. Each outlet passage 5 may have a dimension of, for example, about 3 x 1.5 mm. In the variant shown in Figure 1a the outlet passages 5a are, in contrast, of substantially semicircular shape, each having a radius of, for example, about 1.5 mm. In both cases the passages 5 and, respectively, 5a are formed in the edge region of the cylindrical hood wall 4a in such a manner that the passages are open in the direction of the bottom of the filter carrier vessel 1. Stated differently, the lower edge of the cylinder wall 4b, between the passages 5, 5a, is in engagement with the bottom of the carrier vessel 1.

By virtue of the above-described design of the hood 4, and due to the throughgoing outlet passages 5, 5a, a quieting path is provided within the hood 4 for the creamy espresso coffee which passes through the passages 5, 5a in a delayed manner so that the coffee may be discharged through the outlet apertures 2 with a uniform, fine-pore foam.

It will be understood that the above description of the present invention is susceptible to various modifications, changes and adaptations.

## Claims

1. A filter carrier unit for an espresso making machine, comprising
(a) a filter carrier vessel (1) having a bottom and comprising means for supporting a filter basket (3) therein; and
(b) an outlet aperture (2) provided in said bottom;
(c) a collective space for the creamy espresso coffee discharged from the filter basket, said space being defined between the filter basket and the bottom of the carrier vessel; characterised by
(d) a hood (4) disposed in said collective space and covering said outlet aperture; said hood (4) having an edge region; and
(e) a plurality of throughgoing passages (5) provided in said edge region for allowing said creamy espresso coffee to flow through said hood to said outlet aperture, said hood forming a quieting path over said outlet aperture.

2. The filter carrier unit as defined in claim 1, wherein said hood (4) is composed of an upright cylindrical wall (4b) and a closed top (4a); said throughgoing passages (5) are provided in said cylindrical wall.

3. The filter carrier unit as defined in claim 2, wherein said cylindrical wall (4b) has a lower circumferential edge engaging said bottom of said vessel (1).

4. The filter carrier unit as defined in claim 3, wherein said throughgoing passages (5) interrupt said lower circumferential edge and said throughgoing passages are bounded by said bottom.

5. The filter carrier unit as defined in claim 2, wherein said top (4a) is outwardly convex.

6. The filter carrier unit as defined in claim 1, wherein said throughgoing passages (5) are rectangular and each has a dimension of about 3x1.5 mm.

7. The filter carrier unit as defined in claim 1, wherein said throughgoing passages (5a) are semi-circular, and each has a radius of about 1.5 mm.

8. The filter carrier unit as defined in claim 1, wherein the number of said throughgoing passages (5) is about 5 to 8.

9. The filter carrier unit as defined in claim 1, wherein said throughgoing passages (5) are uniformly spaced from one another.

## Patentansprüche

1. Filterträgereinheit für eine Espressomaschine, aufweisend
(a) einen Filterträgerbehälter (1) mit einem Boden und einer Einrichtung, die einen Filtereinsatz (3) in ihm haltert; und
(b) eine im Boden vorgesehene Auslauföffnung (2);
(c) einen Sammelraum für cremigen aus dem Filtereinsatz auslaufenden Espressokaffee, wobei dieser Raum zwischen dem Filtereinsatz und dem Boden des Trägerbehälters definiert ist;
gekennzeichnet durch
(d) eine Haube (4), die im Sammelraum angeordnet ist und die Auslauföffnung abdeckt; wobei die Haube (4) einen Randbereich aufweist; und
(e) mehrere in diesem Randbereich vorgesehene Durchtrittsöffnungen (5), die eine Strömung des cremigen Espressokaffees durch die Haube zur Auslauföffnung ermöglichen, wobei die Haube eine Beruhigungsstrecke über der Auslauföffnung bildet.

2. Filterträgereinheit nach Anspruch 1, in welcher die Haube (4) aus einer aufrechten Zylinderwand (4b) und einer geschlossenen Deckseite (4a) aufgebaut ist und die Durchtrittsöffnungen (5) in der Zylinderwand vorgesehen sind.

3. Filterträgereinheit nach Anspruch 2, in welcher die Zylinderwand (4b) einen unteren Umfangsrand aufweist, der den Boden des Behälters (1) berührt.

4. Filterträgereinheit nach Anspruch 3, in welcher die Durchtrittsöffnungen (5) den unteren Umfangsrand unterbrechen und die Durchtrittsöffnungen durch den Boden begrenzt werden.

5. Filterträgereinheit nach Anspruch 2, in welcher die Deckseite (4a) nach außen gewölbt ist.

6. Filterträgereinheit nach Anspruch 1, in welcher die Durchtrittsöffnungen (5) rechteckig sind und jeweils Abmessungen von etwa 3 x 1,5 mm aufweisen.

7. Filterträgereinheit nach Anspruch 1, in welcher die Durchtrittsöffnungen (5) halbkreisförmig sind und jeweils einen Radius von etwa 1,5 mm aufweisen.

8. Filterträgereinheit nach Anspruch 1, in welcher die Anzahl der Durchtrittsöffnungen (5) etwa 5 bis 8 beträgt.

9. Filterträgereinheit nach Anspruch 1, in welcher die Durchtrittsöffnungen (5) gleichmäßig voneinander beabstandet angeordnet sind.

## Revendications

1. Unité porte-filtre pour une machine a café expresso comprenant
(a) une enceinte porte-filtre (1), possédant un fond et comprenant des moyens pour supporter un panier de filtre (3) en elle ; et
(b) une ouverture de sortie (2) prévue dans ledit fond;
(c) un espace de collecte pour le café expresso crémeux évacué du panier de filtre, ledit espace étant défini entre le panier de filtre et le fond de l'enceinte de support :
caractérisé par
(d) une hotte (4) disposée dans l'espace de collecte et recouvrant ladite ouverture de sortie ladite hotte (4) comportant une partie de bord ; et
(e) une pluralité de passages traversants (5) prévus dans ladite région de bord de manière a permettre au café expresso crémeux de traverser ladite hotte en direction de ladite ouverture de sortie, ladite hotte formant un trajet de mise au repos au-dessus de ladite ouverture de sortie.

2. Unité de support de filtre selon la revendication 1, dans laquelle ladite hotte (4) est constituée par une paroi cylindrique montante (4b) et une partie supérieure fermée (4a) : lesdits passages traversant (5) étant prévus dans lesdites parois cylindriques.

3. Unité porte-filtre selon la revendication 2, dans laquelle ladite paroi cylindrique (4b) possède un bord circonférentiel inférieur s'appliquant contre ledit fond de ladite enceinte.

4. Unité porte-filtre selon la revendication 3, dans laquelle lesdits passages traversants (5) interrompent ledit bord circonférentiel inférieur, et lesdits passages traversants sont délimitès par ledit fond.

5. Unité porte-filtre selon la revendication 2, dans laquelle ladite partie supérieure (4a) est convexe en direction de l'extérieur.

6. Unité porte-filtre selon la revendication 1, dans laquelle lesdits passages traversants (5) sont rectangulaires et possèdent chacun des dimensions d'environ 3 x 1.5 mm.

7. Unité porte-filtre selon la revendication 1, dans laquelle lesdits passages traversants (5a) sont semi-circulaires et chacun possède un rayon d'environ 1,5 mm.

8. Unité porte-filtre selon la revendication 1, dans laquelle le nombre desdits passages traversants (5) est compris entre environ 5 et 8.

9. Unité porte-filtre selon la revendication 1, dans laquelle lesdits passages traversants (5) sont espacés uniformément les uns des autres.
